# EUROPEAN PATENT APPLICATION

(11) **EP 4 572 375 A1**
(43) Date of publication of application: **18.06.2025**
(21) Application number: 23851711.4
(22) Date of filing: 04.08.2023
(51) Int. Cl.: H04W 24/08, H04W 72/04

(54) **MEASUREMENT PROCESSING METHOD AND APPARATUS, AND TERMINAL AND NETWORK-SIDE DEVICE**

(30) Priority: 10.08.2022 CN 202210956556
(71) Applicant: Vivo Mobile Communication Co., Ltd., Dongguan, Guangdong 523863 (CN)
(72) Inventor: YANG, Qian, Dongguan, Guangdong 523863 (CN); WANG, Lihui, Dongguan, Guangdong 523863 (CN); PAN, Xueming, Dongguan, Guangdong 523863 (CN)
(74) Representative: Lavoix
(86) International application number: PCT/CN2023/111197
(87) International publication number: WO 2024/032490

(57) **Abstract**

Disclosed are a method and apparatus for processing measurement, a terminal, and a network side device, which belong to the technical field of communication. The method for processing measurement of an embodiment of the disclosure includes: receiving first information from a first serving cell; and executing any one of the following: in a case that the first information includes first configuration information, first indication information indicating whether a first gap needs to be configured is transmitted to the first serving cell based on the first configuration information, where the first gap is a measurement gap for first measurement; in a case that the first information includes first configuration information, and it is determined based on the first configuration information that a configured first signal is at least partially located in an activated bandwidth part (BWP) of the first serving cell, the first measurement is conducted outside a second gap, and alternatively, the first measurement is conducted not based on a measurement gap, where the second gap is a measurement gap for second measurement; in a case that the first information includes measurement gap configuration information, the first measurement is conducted in the first gap; and the first indication information is transmitted to the first serving cell based on the first information.

## Description

### CROSS-REFERENCE TO RELATED APPLICATIONS

The disclosure claims the priority to Chinese Patent Application No. 202210956556.2 filed in China on August 10, 2022, which is incorporated herein by reference in its entirety.

### TECHNICAL FIELD

The disclosure belongs to the technical field of communication, and specifically relates to a method and apparatus for processing measurement, a terminal, and a network side device.

### BACKGROUND

With the development of communication technologies, different types of measurement are generally required to ensure reliability of communication and improve performance of a communication system, for example, layer 1 (Layer 1, L1) measurement and layer 3 (Layer 3, L3) measurement. At present, during the layer 1 measurement, a terminal can generally conduct the layer 1 measurement only in an activated bandwidth part (Bandwidth Part, BWP). Resources of the layer 1 measurement are restricted by bandwidth limitation of the activated BWP. Thus, a problem of relatively poor flexibility of the layer 1 measurement is caused in the related art.

### SUMMARY

Embodiments of the disclosure provide a method and apparatus for processing measurement, a terminal, and a network side device, which can solve a problem of relatively poor flexibility of layer 1 measurement.

A first aspect provides a method for processing measurement. The method includes:
receiving, by a terminal, first information from a first serving cell; and
executing a first operation by the terminal.

The first operation includes any one of the following operations:
operation 1, in a case that the first information includes first configuration information, first indication information indicating whether a first gap needs to be configured is transmitted to the first serving cell based on the first configuration information, where the first indication information is determined based on the first configuration information, and the first gap is a measurement gap for first measurement;
operation 2, in a case that the first information includes first configuration information, and it is determined based on the first configuration information that a configured first signal is at least partially located in an activated bandwidth part (BWP) of the first serving cell, first measurement is conducted outside a second gap, and alternatively, first measurement is conducted not based on a measurement gap;
operation 3, in a case that the first information includes measurement gap configuration information, first measurement is conducted in a first gap, where the first gap is determined based on the measurement gap configuration information; and
operation 4, first indication information indicating whether a first gap needs to be configured is transmitted to the first serving cell based on the first information, where the first gap is a measurement gap for first measurement.

The second gap is a measurement gap for second measurement other than the first measurement. The first measurement is layer 1 measurement. The first signal includes a synchronization signal block (SSB) or a channel state information reference signal (CSI-RS).

A second aspect provides a method for processing measurement. The method includes:
transmitting, by a first serving cell, measurement gap configuration information to a terminal, where the measurement gap configuration information includes a measurement gap configuration of layer 1. The measurement gap configuration information is used by the terminal to conduct first measurement in a first gap. The first gap is determined based on the measurement gap configuration of the layer 1.

A third aspect provides an apparatus for processing measurement. The apparatus includes:
a first reception module used to receive first information from a first serving cell; and
an execution module used to execute a first operation.

The first operation includes any one of the following operations:
operation 1, in a case that the first information includes first configuration information, first indication information indicating whether a first gap needs to be configured is transmitted to the first serving cell based on the first configuration information, where the first indication information is determined based on the first configuration information, and the first gap is a measurement gap for first measurement;
operation 2, in a case that the first information includes first configuration information, and it is determined based on the first configuration information that a configured first signal is at least partially located in an activated bandwidth part (BWP) of the first serving cell, first measurement is conducted outside a second gap, and alternatively, first measurement is conducted not based on a measurement gap;
operation 3, in a case that the first information includes measurement gap configuration information, first measurement is conducted in a first gap, where the first gap is determined based on the measurement gap configuration information; and
operation 4, first indication information indicating whether a first gap needs to be configured is transmitted to the first serving cell based on the first information, where the first gap is a measurement gap for first measurement.

The second gap is a measurement gap for second measurement other than the first measurement. The first measurement is layer 1 measurement. The first signal includes a synchronization signal block (SSB) or a channel state information reference signal (CSI-RS).

A fourth aspect provides an apparatus for processing measurement. The apparatus includes:
a transmission module used to transmit measurement gap configuration information to a terminal. The measurement gap configuration information includes a measurement gap configuration of layer 1. The measurement gap configuration information is used by the terminal to conduct first measurement in a first gap. The first gap is determined based on the measurement gap configuration of the layer 1.

A fifth aspect provides a terminal. The terminal includes a processor and a memory. The memory stores a program or an instruction runnable on the processor. When the program or the instruction is executed by the processor, steps of the method according to the first aspect are implemented.

A sixth aspect provides a terminal. The terminal includes a processor and a communication interface. The communication interface is used to receive first information from a first serving cell; and execute a first operation.

The first operation includes any one of the following operations:
operation 1, in a case that the first information includes first configuration information, first indication information indicating whether a first gap needs to be configured is transmitted to the first serving cell based on the first configuration information, where the first indication information is determined based on the first configuration information, and the first gap is a measurement gap for first measurement;
operation 2, in a case that the first information includes first configuration information, and it is determined based on the first configuration information that a configured first signal is at least partially located in an activated bandwidth part (BWP) of the first serving cell, first measurement is conducted outside a second gap, and alternatively, first measurement is conducted not based on a measurement gap;
operation 3, in a case that the first information includes measurement gap configuration information, first measurement is conducted in a first gap, where the first gap is determined based on the measurement gap configuration information; and
operation 4, first indication information indicating whether a first gap needs to be configured is transmitted to the first serving cell based on the first information, where the first gap is a measurement gap for first measurement.

The second gap is a measurement gap for second measurement other than the first measurement. The first measurement is layer 1 measurement. The first signal includes a synchronization signal block (SSB) or a channel state information reference signal (CSI-RS).

A seventh aspect provides a network side device. The network side device includes a processor and a memory. The memory stores a program or an instruction runnable on the processor. When the program or the instruction is executed by the processor, steps of the method according to the second aspect are implemented.

An eighth aspect provides a network side device. The network side device includes a processor and a communication interface. The communication interface is used to transmit measurement gap configuration information to a terminal. The measurement gap configuration information includes a measurement gap configuration of layer 1. The measurement gap configuration information is used by the terminal to conduct first measurement in a first gap. The first gap is determined based on the measurement gap configuration of the layer 1.

A ninth aspect provides a communication system. The communication system includes: a terminal and a network side device. The terminal is used to execute steps of the method for processing measurement according to the first aspect. The network side device is used to execute steps of the method for processing measurement according to the second aspect.

A tenth aspect provides a readable storage medium. The readable storage medium stores a program or an instruction. When the program or the instruction is executed by a processor, steps of the method according to the first aspect are implemented, and alternatively, steps of the method according to the second aspect are implemented.

An eleventh aspect provides a chip. The chip includes a processor and a communication interface. The communication interface is coupled to the processor. The processor is used to run a program or an instruction, such that steps of the method according to the first aspect are implemented, and alternatively, steps of the method according to the second aspect are implemented.

A twelfth aspect provides a computer program/program product. The computer program/program product is stored in a storage medium. The computer program/program product is executed by at least one processor, such that steps of the method according to the first aspect are implemented, and alternatively, steps of the method according to the second aspect are implemented.

In the embodiment of the disclosure, the first information is received from the first serving cell, and the first operation is executed based on the first information, such that a behavior related to the layer 1 measurement is clarified. Since the layer 1 measurement in the embodiment of the disclosure may be located in a currently activated BWP or outside the activated BWP, flexibility of the layer 1 measurement is improved. Meanwhile, the layer 1 measurement may be conducted outside the activated BWP, such that terminals supporting bwp-WithoutRestriction or similar capabilities can be applied to a network, and high terminal and system performance can be guaranteed.

### BRIEF DESCRIPTION OF THE DRAWINGS

FIG. 1 is a schematic structural diagram of a network to which the disclosure is applicable;
FIG. 2 is a schematic flow diagram of a method for processing measurement according to the disclosure;
FIG. 3 is an illustrative diagram of a measurement scene in a method for processing measurement according to the disclosure;
FIG. 4 is an illustrative diagram of another measurement scene in a method for processing measurement according to the disclosure;
FIG. 5 is an illustrative diagram of a pattern of a basic measurement gap in a method for processing measurement according to the disclosure;
FIG. 6 to FIG. 8 are illustrative diagrams of a measurement scene in a method for processing measurement according to the disclosure;
FIG. 9 is a schematic flow diagram of another method for processing measurement according to the disclosure;
FIG. 10 is a structural diagram of an apparatus for processing measurement according to the disclosure;
FIG. 11 is a structural diagram of another apparatus for processing measurement according to the disclosure;
FIG. 12 is a structural diagram of a communication device according to the disclosure;
FIG. 13 is a structural diagram of a terminal according to the disclosure; and
FIG. 14 is a structural diagram of a network side device according to the disclosure.

### DETAILED DESCRIPTION

Technical solutions in embodiments of the disclosure will be clearly described below with reference to accompanying drawings in the embodiments of the disclosure. Obviously, the embodiments described are some embodiments rather than all embodiments of the disclosure. Based on the embodiments of the disclosure, all other embodiments obtained by those of ordinary skill in the art should fall within the protection scope of the disclosure.

In the description and claims of the disclosure, terms such as "first" and "second" are intended to distinguish between similar objects but are not used to indicate a specific order or sequence. It should be understood that terms used in this way can be interchanged under appropriate circumstances, such that the embodiment of the disclosure can be implemented in a sequence other than those illustrated or described herein. In addition, the objects distinguished by "first" or "second" are generally objects of a same type with a number of objects not restricted. For example, a first object can indicate one or more first objects. In addition, "and/or" in the description and the claims represents at least one of connected objects, and the character "/" generally represents an "or" relationship between two associated context objects.

It is worth pointing out that the technology described in the embodiment of the disclosure is not restricted to a long term evolution (Long Term Evolution, LTE)/LTE-advanced (LTE-Advanced, LTE-A) system, and can also be used in other radio communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of the disclosure are generally used interchangeably, and the described technology can be applied to the systems and radio technologies described above, or applied to other systems and radio technologies. The following description describes a new radio (New Radio, NR) system for illustration. NR terms are used in most of the following description, but the technologies can be applied to applications other than NR system applications, such as a 6^{th} generation (6^{th} Generation, 6G) communication system.

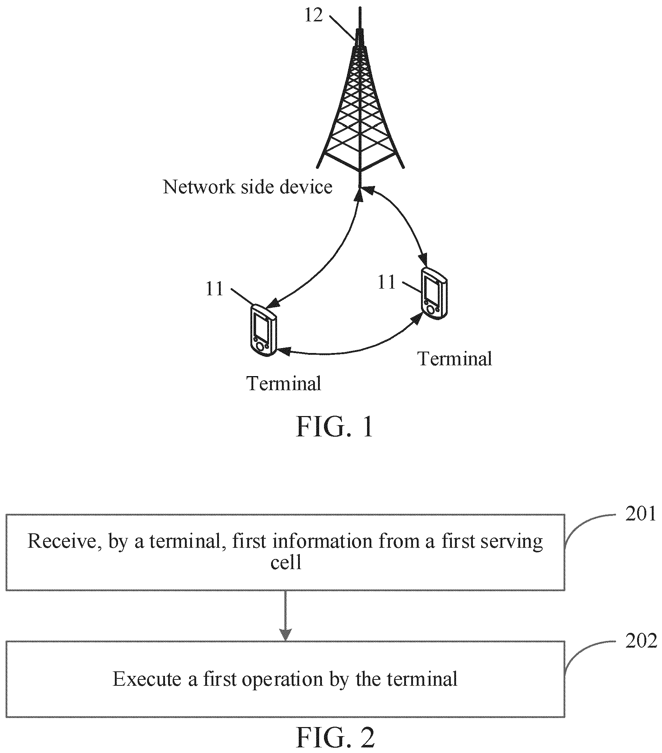

FIG. 1 shows a block diagram of a radio communication system applied to an embodiment of the disclosure. The radio communication system includes a terminal 11 and a network side device 12. The terminal 11 may be a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home appliance (home equipment having a radio communication function, such as a refrigerator, a television, a washing machine or a furniture), and terminal side devices such as a game machine, a personal computer (personal computer, PC), a teller machine or a self-service machine. The wearable device includes: a smart watch, a smart band, a smart headset, smart glasses, smart jewelry (a smart bracelet, a smart chain bracelet, a smart ring, a smart necklace, a smart anklet, a smart ankle chain, etc.), a smart wrist strap, a smart garment, etc. It should be noted that a specific type of the terminal 11 is not restricted by the embodiment of the disclosure. The network side device 12 may include an access network device or a core network device. The access network device may alternatively be referred to as a radio access network device, a radio access network (Radio Access Network, RAN), a radio access network function, or a radio access network unit. The access network device may include a base station, a wireless local area network (Wireless Local Area Network, WLAN) access point, a wireless fidelity (WiFi) node, etc. The base station may be referred to as a node B, an evolution node B (eNB), an access point, a base transceiver station (Base Transceiver Station, BTS), a radio base station, a radio transceiver, a basic service set (Basic Service Set, BSS), an extended service set (Extended Service Set, ESS), a home B node, a home evolution type B node, a transmitting receiving point (Transmitting Receiving Point, TRP), or any other suitable term in the art, as long as same technical effects are achieved. The base station is not restricted to a particular technical vocabulary. It should be noted in the embodiment of the disclosure, only a base station in an NR system is described as an example, and a specific type of the base station is not restricted.

For convenience of understanding, some contents involved in the embodiments of the disclosure will be described below.

### I, BWP.

An LTE terminal generally operates in a carrier bandwidth. The terminal may receive all channels and signals transmitted in the carrier bandwidth. A bandwidth part (BWP) is introduced to an NR system. A base station may configure up to 4 downlink BWPs and uplink BWPs for the terminal. At a moment, only one BWP is in an activated state. A BWP on one carrier may be part of the carrier bandwidth. In this way, power of the terminal can be saved. That is, a terminal operating on the activated BWP may fail to receive a channel and a signal, other than the activated BWP, transmitted on the carrier.

Thus, a basic BWP operation is restricted to a certain extent. For example, in a stand alone (Stand alone, SA) mode, both a bandwidth of a control resource set (Control resource set, CORESET) #0 of a primary cell (Primary cell, PCell) and a bandwidth of a synchronization signal and PBCH block (Synchronization Signal and PBCH block, SSB) need to be included in the bandwidth of the activated BWP. In an NR dual connectivity (NR Dual connectivity, NR-DC) mode, the bandwidth of the CORESET#0 of the PCell and a primary SCG cell (Primary SCG Cell, PSCell) and the bandwidth of the SSB need to be included in bandwidths of activated BWPs on carriers of the PCell and the PSCell respectively. For a secondary cell (SCell), the SSB needs to be included in a bandwidth of an activated BWP on a carrier of the SCell. In this case, layer 1 measurement based on the SSB may be directly conducted without any measurement gap (measurement gap).

However, the SSB is not restricted to be located in the BWP, such that flexibility of network deployment and configuration can be achieved. The 3rd generation partnership project (3GPP) introduces a terminal capability of BWP-without restriction (bwp-WithoutRestriction). A terminal supporting the capability does not require an SSB bandwidth to be within a BWP bandwidth.

Optionally, the BWP-without restriction may indicate that a BWP operation without a bandwidth limitation is supported. A bandwidth limitation on downlink (Downlink, DL) BWPs of the PCell and the PSCell indicates that a bandwidth of a DL BWP configured by a terminal-specific radio resource control (Radio Resource Control, RRC) may not include a bandwidth of the CORESET #0 (if configured) and a bandwidth of the SSB. For the SCell, it indicates that the bandwidth of the DL BWP may not include the SSB.

### II, Layer 1 measurement.

NR supports a plurality of types of layer 1 measurement, including layer 1 reference signal received power (L1, Reference Signal Received Power, L1-RSRP) measurement, radio link monitoring (Radio Link Monitoring, RLM) measurement, beam failure detection (Beam Failure Detection, BFD), candidate beam detection (Candidate Beam Detection, CBD), downlink timing measurement, etc. At present, a 3GPP specification asks a reference signal of the layer 1 measurement is in an activated BWP, and no measurement gap is required by all types of layer 1 measurement.

The layer 1 measurement needs to satisfy requirements such as a defined measurement delay and measurement precision, and further needs to satisfy requirements in terms of scheduling limitation and measurement limitation.

For example, L1-RSRP measurement of an SSB has the following measurement limitations:
for L1-RSRP measurement in a frequency range 1 (Frequency range 1, FR1), in a case that an SSB and another channel state information reference signal (Channel State Information Reference Signal, CSI-RS) used as L1-RSRP/RLM/BFD/CBD are on a same orthogonal frequency division multiplex (Orthogonal frequency division multiplex, OFDM) symbol, the following conditions are satisfied: If subcarrier spacing (Subcarrier Spacing, SCS) of the SSB is the same as that of the CSI-RS or an SCS of the SSB is different from that of the CSI-RS, and a terminal supports a capability of simultaneousRxDataSSB-DiffNumerology, the terminal may simultaneously conduct L1-RSRP measurement based on the SSB and layer 1 measurement based on the CSI-RS, and the L1-RSRP measurement based on the SSB is not restricted; if SCS of the SSB is different from that of the CSI-RS, and a terminal does not support a capability of simultaneousRxDataSSB-DiffNumerology, the terminal cannot simultaneously conduct L1-RSRP measurement based on the SSB and layer 1 measurement based on the CSI-RS, and a measurement period of the L1-RSRP measurement of the SSB may be prolonged; and
for L1-RSRP measurement in a frequency range 2 (Frequency range 2, FR2), in a case that an SSB on one carrier and another CSI-RS used as L1-RSRP/RLM/BFD/CBD on a same carrier or different carriers and in a same band (band) are on a same OFDM symbol, a terminal is not asked to simultaneously conduct L1-RSRP measurement based on the SSB and layer 1 measurement based on the CSI-RS, and the terminal may select either of the two types of measurement. A measurement period of the L1-RSRP of the SSB may be prolonged.

If a terminal has an independent beam management (Independent Beam Management, IBM) capability in a pair of FR2 bands, in a case that a network side device configures the L1-RSRP measurement based on the SSB on one band, and meanwhile, configures L1-RSRP/RLM/BFD/CBD based on the CSI-RS on another band, regardless of whether the SSB and the CSI-RS have same SCS, the terminal conducts SSB L1-RSRP measurement on the band, and no measurement limitation may be caused to CSI-RS layer 1 measurement on another band.

Similarly, a measurement limitation on RLM, BFD and CBD measurement based on the SSB is the same as that on the L1-RSRP measurement. Only the L1-RSRP of the SSB in the measurement limitation needs to be changed to RLM/BFS/CBD of the SSB separately.

Measurement and physical downlink control channel (Physical downlink control channel, PDCCH)/physical downlink shared channel (Physical downlink shared channel, PDSCH) reception may use different reception beams. In this case, in a case that layer 1 measurement is conducted, a scheduling limitation may be caused.

For example, in a case that RLM measurement based on the SSB is conducted, a scheduling limitation is as follows:
for the RLM measurement of the SSB on the FR1, in a case that the SSB and the PDCCH/PDSCH have same SCS, no scheduling limitation is caused. The terminal may be scheduled on a symbol of RLM-RS.

For the RLM measurement of the SSB on the FR1, in a case that the SSB and the PDCCH/PDSCH have different SCS and the terminal has a capability of simultaneousRxDataSSB-DiffNumerology, no scheduling limitation is caused. The terminal may be scheduled on a symbol of RLM-RS. In a case that the SSB and the PDCCH/PDSCH have different SCS and the terminal does not have a capability of simultaneousRxDataSSB-DiffNumerology, when the RLM measurement based on the SSB is conducted, a scheduling limitation case is as follows: on a symbol where the SSB for the RLM is located, the terminal does not require transmission of a physical uplink control channel (Physical Uplink Control Channel, PUCCH), a physical uplink shared channel (Physical Uplink Shared Channel, PUSCH), and/or a sounding reference signal (SRS), or reception of a PDCCH, a PDSCH, a tracking reference signal (tracking reference signal, TRS), and/or a CSI-RS used as a channel quality indicator (Channel quality indicator, CQI); for intra-band (intra-band) carrier aggregation (Carrier Aggregation, CA) on the FR1, a measurement limitation on a PCell or a PSCell that is an FR1 serving cell is applied to all serving cells on a same band, and a scheduling limitation is applied to all symbols that fully or partially overlap with a limitation symbol; and for inter-band (inter-band) CA on the FR1, no scheduling limitation is set on an FR1 serving cell on a band different from a band of a PCell or a PSCell that is an RLM serving cell for the FR1 SSB.

For RLM measurement of an SSB on a PCell or a PSCell that is an FR2 serving cell, scheduling limitation cases are as follows: on an SSB symbol for RLM, the terminal does not require transmission of a PUCCH, a PUSCH, and/or an SRS, or reception of a PDCCH, a PDSCH, a TRS, and/or a CSI-RS used as a CQI; and if the terminal has an independent beam management (Independent Beam Management) capability in a pair of FR2 bands, for inter-band CA of the FR2, no scheduling limitation is set on the FR2 serving cell on one band in a case that the following conditions are satisfied: the serving cell and a PCell or a PSCell that is the FR2 serving cell for the RLM based on the SSB are on different bands; and an SB and data on another band have same SCS or different SCS.

In a case that the following conditions are satisfied, for a CORESET multiplex mode 3 of an SSB for measurement RLM and remaining minimum system information (Remaining Minimum SI, RMSI), the terminal is asked to receive a PDCCH in a type0-PDCCH common search space (Type0-PDCCH Common Search Space, Type0-PDCCH CSS) set and a corresponding PDSCH on an SSB symbol for RLM measurement. For a CORESET multiplex mode 2 of the SSB for RLM measurement and the RMSI, the terminal is asked to receive a PDSCH corresponding to a PDCCH in a Type0-PDCCH CSS set on the SSB symbol for RLM measurement:
the terminal is informed of a system information change through paging; and
a PDCCH used for system change informing in a Type2-PDCCH CSS set monitored by the terminal and a PDCCH in the Type0-PDCCH CSS set monitored by the terminal have a gap larger than 2 slots (slot).

Similarly, a scheduling limitation on L1-RSRP, BFD and CBD measurement based on the SSB is the same as that on the RLM measurement based on the SSB.

### III, Measurement gap.

Layer 3 measurement requires a measurement gap in many cases. For example, inter-frequency (Inter-frequency) measurement and inter-radio access technology (Inter-RAT) system measurement both require a network configured measurement gap. The measurement needs to be conducted in a measurement gap. A terminal cannot be scheduled in the measurement gap. For the intra-frequency measurement, if an SSB is not completely in an activated BWP, the measurement needs to be conducted in the measurement gap. At present, a measurement gap is configured only for the layer 3 measurement.

### IV, SSB.

In an NR system, the SSB plays a vital role. Initial access of a terminal needs to search for an SSB on a supported frequency point, obtain downlink synchronization, and obtain master information block (Master Information Block, MIB) information of a cell. After the terminal enters an idle state, the terminal determines whether the terminal needs to reselect to a new cell by measuring the SSB. In a connected state, a network side device may configure a measurement object (measurement object, MO) that includes information such as a frequency point of the SSB. The terminal conducts layer 3 measurement according to a configuration of the MO and conducts reporting. A network determines whether to conduct switching or whether to conduct load balancing according to information reported by the terminal.

In the NR system, a cell defining SSB (Cell Defining SSB, CD-SSB) is generally deployed. The SSB needs to be deployed on a synchronization raster (Synchronization raster, Sync raster), and the terminal may obtain complete system information with the CD-SSB. A system of a terminal supporting a reduced capability (Reduced Capability, RedCap) may additionally deploy a non-cell defining SSB (Non-Cell defining SSB, NCD-SSB), so as to support a large quantity of RedCap terminals. The NCD-SSB may alternatively be applied to a non-RedCap terminal.

The NCD-SSB is not necessarily deployed on the Sync raster, and the NCD-SSB does not further indicate more system information, such that the terminal fails to access a cell through the NCD-SSB. However, layer 3 and layer 1 measurement based on the NCD-SSB is completely the same as layer 3 and layer 1 measurement of the CD-SSB in some aspects.

### V, NeedForGapsInfoNR.

An information element (Information element, IE) of the *NeedForGapsInfoNR* is introduced into related technologies.

Optionally, a terminal may indicate whether to require a system configured measurement gap through the IE in a case that an SSB on a band is measured. The IE may indicate whether a measurement gap is required by intra-frequency measurement corresponding to an SSB of a serving cell, or may indicate whether a measurement gap is required by inter-frequency measurement on a band. After RRC re-configuration, the terminal indicates whether a network side device requires a measurement gap according to implementation of the terminal. If the terminal indicates that the measurement gap is not required by the intra-frequency measurement on a serving cell, even when the SSB is not in a bandwidth of an activated BWP, the measurement gap may not be required by intra-frequency measurement of layer 3.

### VI, NeedForGapNCSG-InfoNR.

An IE of the *NeedForGapNCSG-InfoNR* is introduced into related technologies.

Optionally, the terminal may indicate whether to require a system configured measurement gap of a network controlled small gap (network controlled small gap, NCSG) type or require no measurement gap (that is, nogap-noncsg) through the IE in a case that an SSB on a band is measured. The IE may indicate whether an NCSG measurement gap is required by intra-frequency measurement corresponding to an SSB of a serving cell.

Alternatively, the IE may indicate whether an NCSG measurement gap is required by inter-frequency measurement on a band. After RRC re-configuration, the terminal indicates whether a network side device requires a measurement gap according to implementation of the terminal. If the terminal indicates that the measurement gap is not required by the intra-frequency measurement on a serving cell (that is, nogap-noncsg), even when the SSB is not in a bandwidth of an activated BWP, the measurement gap may not be required by intra-frequency measurement of layer 3.

The 3GPP introduces a terminal capability of bwp-WithoutRestriction. A terminal supporting the capability does not require an SSB bandwidth to be within an activated BWP bandwidth. However, at present, no indicator is provided to ensure that the terminal supporting the capability is capable of operating normally in a network.

For current layer 1 measurement, a reference signal for corresponding measurement needs to be in the activated BWP, and all layer 1 measurement is conducted outside the measurement gap. That is, in a case that the SSB is outside the activated BWP, a method for conducting layer 1 measurement based on the SSB and a method for a base station to schedule such terminals both need to be determined or even need to define related indicators and processes, such that performance of such terminals and systems in the network can be ensured. In view of that, a method for processing measurement is provided.

The method for processing measurement according to the embodiment of the disclosure will be described in detail below through some embodiments and their application scenes with reference to the accompanying drawings.

With reference to FIG. 2, an embodiment of the disclosure provides a method for processing measurement. As shown in FIG. 2, the method for processing measurement includes:
Step 201, first information is received from a first serving cell by a terminal.
Step 202, a first operation is executed by the terminal.

The first operation includes any one of the following operations:
operation 1, in a case that the first information includes first configuration information, first indication information indicating whether a first gap needs to be configured is transmitted to the first serving cell based on the first configuration information, where the first indication information is determined based on the first configuration information, and the first gap is a measurement gap for first measurement;
operation 2, in a case that the first information includes first configuration information, and it is determined based on the first configuration information that a configured first signal is at least partially located in an activated bandwidth part (BWP) of the first serving cell, first measurement is conducted outside a second gap, and alternatively, first measurement is conducted not based on a measurement gap;
operation 3, in a case that the first information includes measurement gap configuration information, first measurement is conducted in a first gap, where the first gap is determined based on the measurement gap configuration information; and
operation 4, first indication information indicating whether a first gap needs to be configured is transmitted to the first serving cell based on the first information, where the first gap is a measurement gap for first measurement.

The second gap is a measurement gap for second measurement other than the first measurement. The first measurement is layer 1 measurement. The first signal includes a synchronization signal block (SSB) or a channel state information reference signal (CSI-RS).

In the embodiment of the disclosure, the terminal may be connected to at least one serving cell. For example, the terminal may be connected to two serving cells based on dual connectivity. A plurality of serving cells are connected based on CA. The first serving cell may be understood as one of at least one serving cell connected to the terminal.

Optionally, in the embodiment of the disclosure, the SSB may be a CD-SSB or an NCD-SSB, and is not further limited herein. The first gap may be understood as a measurement gap for the layer 1 measurement. The second gap may be understood as a measurement gap for the second measurement.

For the operation 1, the first configuration information may be understood as configuration information (for example, RRC configuration information or RRC re-configuration information) of the first serving cell. The terminal may determine whether all configured SSBs are located in an activated BWP of a current first serving cell based on the first configuration information. In this way, whether to transmit the first indication information to the first serving cell is determined. For example, in some embodiments, in a case of determining that all the configured SSBs are located in the activated BWP of the current first serving cell, the first indication information may be not transmitted. In a case of determining that the configured SSBs are at least partially located outside the activated BWP of the current first serving cell, the first indication information may be transmitted. Optionally, in a case that the terminal supports bwp-Without Restriction or a similar capability, and the terminal further supports indicating whether the first gap needs to be configured for the layer 1 measurement, the terminal may determine whether a measurement gap is required by the layer 1 measurement according to the RRC configuration information or the RRC configuration information, conduct reporting, and then conduct the corresponding layer 1 measurement. The terminal indicates whether the first gap needs to be configured, such that different measurement methods may be used for measurement according to actual needs, thus improving flexibility of the layer 1 measurement.

For the operation 2, the first configuration information may be understood as the configuration information of the first serving cell. The terminal may determine whether all the configured SSBs are located in the activated BWP of the current first serving cell based on the first configuration information. In a case of determining that the configured SSBs are at least partially located outside the activated BWP of the current first serving cell, the first measurement may be conducted outside the second gap, or the first measurement may be conducted not based on the measurement gap. Optionally, in a case that the first measurement is conducted not based on the measurement gap, no indication may be needed, and it is directly agreed by a protocol that the first measurement does not need to be conducted based on the measurement gap.

For the operation 3, it may be understood that the first serving cell configures the first gap for the terminal, and the terminal conducts the first measurement in the first gap configured.

For the operation 4, the first information may include a capability inquiry message, an RRC connection establishment message, an RRC connection recovery message, etc. That is, in a case that the first operation includes the operation 4, the first information includes at least one of the following: the capability inquiry request message, the RRC connection establishment message, and the RRC connection recovery message. In the embodiment, a case that the terminal transmits the first indication information may be understood as a case that the terminal reports capability information. For example, in some embodiments, in a case that the first information is the capability inquiry message, a case that the first indication information is transmitted by the terminal may be understood as a case that a network asks capability information to be reported. In a case that the first information is the RRC connection establishment message or the RRC connection recovery message, a case that the first indication information is transmitted by the terminal may be understood as a case that the terminal autonomously reports capability information. The terminal indicates whether the first gap needs to be configured, such that different measurement methods may be used for measurement according to actual needs, thus improving flexibility of the layer 1 measurement.

In the embodiment of the disclosure, the first information is received from the first serving cell, and the first operation is executed based on the first information, such that a behavior related to the layer 1 measurement is clarified. Since the layer 1 measurement in the embodiment of the disclosure may be located in a currently activated BWP or outside the activated BWP, flexibility of the layer 1 measurement is improved. Meanwhile, the layer 1 measurement may be conducted outside the activated BWP, such that terminals supporting bwp-WithoutRestriction or similar capabilities can be applied to a network, and high terminal and system performance can be guaranteed.

Optionally, in some embodiments, in a case that the first indication information indicates that the first gap needs to be configured, the operation 1 further includes:
the measurement gap configuration information is received from the first serving cell, where the measurement gap configuration information includes a measurement gap configuration of layer 1; and
the first measurement is conducted in the first gap, where the first gap is determined based on the measurement gap configuration of the layer 1.

It should be understood that in the embodiment of the disclosure, the measurement gap configuration information may include one or more measurement gap configurations. The measurement gap configuration for the layer 1 may be indicated by the first serving cell, or may be autonomously determined by the terminal, and is not further limited herein.

In the embodiment of the disclosure, in a case that the first indication information indicates that the first gap needs to be configured, the first measurement may be conducted based on the operation 3. In a case that the first indication information indicates that the first gap does not need to be configured, the first measurement may be conducted based on the operation 2. For example, in some embodiments, if the second gap is configured, the first measurement may be conducted outside the second gap. If no measurement gap is configured, the first measurement is conducted not based on the measurement gap.

Optionally, in some embodiments, in a case that the first indication information indicates that the first gap needs to be configured, and the first gap is a network controlled small gap, the measurement gap configuration of the layer 1 is a network controlled small gap pattern configuration.

In the embodiment of the disclosure, the terminal may indicate that the first gap needs to be configured based on an intraFreq-needForNCSG indication ncsg. In this case, the measurement gap configuration of the layer 1 is an NCSG. In other words, the first serving cell may use the network controlled small gap pattern configuration as the measurement gap configuration of the layer 1.

Optionally, in some embodiments, the first indication information is carried by any one of the following signaling:
first signaling, where the first signaling is signaling used to indicate whether the network controlled small gap is required by intra-frequency measurement;
second signaling, where the second signaling is signaling used to indicate whether a gap is required by the intra-frequency measurement; and
third signaling, where the third signaling is signaling specially used to indicate whether the first gap needs to be configured for layer 1 measurement.

In the embodiment of the disclosure, the first signaling may be understood as intraFreq-needFor NCSG signaling. In a case that a first measurement gap does not need to be configured, nogap-noncsg may be indicated based on the intraFreq-needForNCSG.

The second signaling may be understood as intraFreq-needForGap. In a case that a first measurement gap does not need to be configured, no-gap may be indicated based on the intraFreq-needForGap.

The third signaling may be understood as newly designed signaling, and is specifically used to indicate whether the first gap needs to be configured for the layer 1 measurement. For example, a first value may be used to indicate that the first gap needs to be configured, and a second value may be used to indicate that the first gap does not need to be configured.

Optionally, in some embodiments, in a case that the first indication information indicates that the first gap does not need to be configured, an interruption behavior of a second serving cell satisfies at least one of the following conditions:
in a case that the first indication information is carried by the first signaling, the second serving cell does not allow interruption to occur; and
in a case that the first indication information is carried by the second signaling or the third signaling, the second serving cell does not allow interruption to occur, and alternatively, interruption of the second serving cell is located before and after a symbol where the first signal of the first measurement is located.

The second serving cell is a serving cell other than the first serving cell of at least two serving cells connected to the terminal.

In the embodiment of the disclosure, a case that interruption of the second serving cell is located before and after the symbol where the first signal of the first measurement is located may be understood as: a case that interruption may occur in a second cell before and after the symbol where the first signal of the first measurement is located.

The symbol may be understood as an OFDM symbol. If illustration is provided with the SSB as the first signal as an example, one SSB may generally include 4 OFDM symbols. Before the 4 symbols start, interruption may occur in the second serving cell. After the 4 symbols end, interruption may also occur in the second serving cell.

Optionally, in a case that the first signal is the SSB, the first configuration information includes any one of the following:
BWP configuration information and SSB configuration information; and
BWP configuration information, SSB configuration information, and carrier bandwidth configuration information.

In the embodiment of the disclosure, the BWP configuration information is used to configure one or more BWPs, and the terminal may activate one of the BWPs. The SSB configuration information is used to configure an SSB that needs to be measured. Optionally, in some embodiments, the SSB configured by the SSB configuration information is at least partially located outside the activated BWP of the first serving cell.

It should be noted that in a case that the first indication information is carried by first signaling or second signaling, the first configuration information further includes at least one of the following:
carrier aggregation (CA) configuration information; and
multiple-input multiple-output (Multiple-Input Multiple-Output, MIMO) configuration information.

The first signaling is signaling used to indicate whether a network controlled small gap is required by intra-frequency measurement. The second signaling is signaling used to indicate whether a gap is required by the intra-frequency measurement.

Optionally, in some embodiments, the first measurement satisfies at least one of the following conditions:
in a case that the first operation includes the operation 2, the first measurement satisfies a first limiting condition; and
in a case that the first operation includes the operation 1 or the operation 4, and the first indication information indicates that the first gap does not need to be configured, the first measurement satisfies the first limiting condition.

The first limiting condition includes at least one of the following conditions:
the first measurement has a same measurement limitation as the layer 1 measurement in a case of satisfying a first condition; and
the first measurement has a same scheduling limitation as the layer 1 measurement in a case of satisfying the first condition.

The first condition includes: the configured SSB is located in the activated BWP of the first serving cell.

In the embodiment of the disclosure, reference may be made to the description of the embodiments for cases that the layer 1 measurement in the case of satisfying the first condition has the same measurement limitation and the layer 1 measurement in the case of satisfying the first condition has the same scheduling limitation, which will not be repeated herein.

Optionally, in some embodiments, an operation bandwidth of the terminal is determined based on any one of the following:
the activated BWP of the first serving cell and the SSB configured by the SSB configuration information; and
the carrier bandwidth configuration information.

In the embodiment of the disclosure, the terminal no longer sets an operation bandwidth of radio frequency according to only the BWP. It should be noted that in a case that the operation bandwidth is determined based on the activated BWP of the first serving cell and the SSB configured by the SSB configuration information, the operation bandwidth should include the activated BWP and the SSB.

Optionally, in some embodiments, in a case that the first operation includes the operation 2, the first measurement does not cause interruption of the second serving cell, and the second serving cell is a different serving cell except for the first serving cell of at least two serving cells connected to the terminal.

Optionally, in some embodiments, the measurement gap configuration information includes at least one measurement gap configuration. The measurement gap configuration includes a measurement gap repetition period (Measurement Gap Repetition Period, MGRP), a measurement gap length (Measurement Gap Length, MGL), a measurement gap offset (Measurement Gap Offset), and a measurement gap timing advance (Timing Advance Measurement Gap, MGTA).

Optionally, the MGRP and the MGL are used to form a measurement gap pattern.

Optionally, in some embodiments, the measurement gap configuration further includes at least one of the following:
a measurement gap priority;
measurement gap allocation information; and
a measurement type associated with the measurement gap.

In the embodiment of the disclosure, the measurement gap allocation information is used for a measurement gap including both the first measurement and the second measurement. For example, assuming that one measurement gap configuration is configured and the measurement gap configuration is used for both the first measurement and the second measurement, each measurement gap corresponding to the measurement gap configuration includes both the first measurement and the second measurement. In this case, the allocation information is used to determine which of the measurement gaps corresponding to the measurement gap configuration are the first gaps (actually used for the first measurement) and which of the measurement gaps are the second gaps (actually used for the second measurement). In some embodiments, assuming that the first measurement and the second measurement have different measurement repetition periods, some measurement gaps corresponding to the measurement gap configuration each include the first measurement and the second measurement. In this case, the allocation information is used to determine which of the measurement gaps are first gaps and which of the measurement gaps are second gaps.

Optionally, the allocation information may include one or more allocation ratios, and for example, may include an allocation ratio for the first measurement and/or an allocation ratio for the second measurement. Assuming that the measurement gap configuration is used for both the first measurement and the second measurement, the first gap for the first measurement and the second gap for the second measurement in the measurement gap corresponding to the measurement gap configuration may be determined through one allocation ratio.

The measurement gap priority is used to determine whether to execute the first measurement or the second measurement in a case that the first gap and the second gap conflict with each other. For example, in a case that the measurement gap priority of the first gap is higher than that of the second gap, the first measurement may be conducted in the first gap, and the second measurement is not conducted in the second gap.

It should be understood that a case that the first gap and the second gap conflict with each other may be understood as a case that the first gap and the second gap at least partially overlap with each other in a time domain, or an interval between the first gap and the second gap in a time domain is shorter than preset duration, and for example, 4 ms.

The measurement types associated with the measurement gap may include the first measurement and the second measurement, or may include specific measurement in the first measurement and the second measurement, and for example, downlink timing measurement, reference signal received power measurement of the layer 1, radio link monitoring measurement, beam failure detection (BFD) measurement, and candidate beam detection (CBD) measurement. That is, the serving cell may indicate the measurement type associated with the measurement gap corresponding to the measurement gap configuration. In this case, measurement corresponding to the measurement type associated with the measurement gap may be conducted in the measurement gap corresponding to the measurement gap configuration.

Optionally, in some embodiments, a value of the measurement gap repetition period may be 5 ms, 10 ms, 20 ms, 40 ms, 80 ms, or 160 ms. A value of the measurement gap repetition period may be 1 ms, 1.5 ms, 2 ms, 3 ms, 3.5 ms, 4 ms, 5.5 ms, or 6 ms.

Optionally, in some embodiments, the measurement gap configuration information satisfies at least one of the following conditions:
in a case that the measurement gap configuration information includes one measurement gap configuration, the measurement gap configuration is used for the first measurement, and alternatively, the measurement gap configuration is used for the first measurement and the second measurement; and
in a case that the measurement gap configuration information includes at least two measurement gap configurations, the measurement gap configurations further include measurement types associated with the measurement gap.

For example, in a case that the measurement gap configuration information includes two measurement gap configurations, it indicates that one of the measurement gap configurations is used for the first measurement and the other measurement gap configuration is used for the second measurement.

Optionally, in some embodiments, in a case that the measurement gap configuration information includes the one measurement gap configuration, and the measurement gap configuration is used for the first measurement and the second measurement, the method further includes either one of the following steps:
the first gap used for the first measurement and the second gap used for the second measurement in the measurement gap corresponding to the measurement gap configuration are determined by the terminal based on a first allocation ratio, where the first allocation ratio is an allocation ratio agreed by a protocol, or an allocation ratio indicated by measurement gap allocation information included by the measurement gap configuration; and
the first gap used for the first measurement and the second gap used for the second measurement in the measurement gap corresponding to the measurement gap configuration are determined by the terminal, where only the first measurement is included in the first gap, the first measurement and the second measurement are included in the second gap, and the first measurement and the second measurement conflict with each other in the second gap.

Optionally, in some embodiments, in a case that the measurement gap configuration information includes at least two measurement gap configurations, and a measurement gap repetition period of the first measurement is shorter than a measurement gap repetition period of the second measurement, the first measurement satisfies either one of the following conditions:
the first measurement is conducted in the first gap that does not conflict with the second gap; and
in a case that the first gap and the second gap conflict with each other, whether to conduct the first measurement in the first gap is determined according to a measurement gap priority.

In the embodiment of the disclosure, for example, the measurement gap configuration information includes a measurement gap configuration 1 and a measurement gap configuration 2. The measurement gap configuration 1 is used to configure a plurality of first gaps. The measurement gap configuration 2 is used to configure a plurality of second gaps. In a case that a first gap conflicts with a second gap, the first measurement may not be conducted on the first gap with a conflict, or whether to conduct the first measurement may be determined according to a measurement gap priority. For example, if the measurement gap priority of the first gap is higher than that of the second gap, the first measurement may be conducted in the first gap with the conflict, and the second measurement may not be conducted in the second gap with the conflict. For example, if a measurement gap priority of the first gap is lower than that of the second gap, the first measurement may not be conducted in the first gap with the conflict, and the second measurement may be conducted in the second gap with the conflict.

Optionally, in some embodiments, the measurement gap configuration is used to configure a measurement gap at a terminal level or used to configure a measurement gap at a frequency range (FR) level.

In the embodiment of the disclosure, in a case that the measurement gap configuration is used to configure the measurement gap at the terminal level, it may be understood that the measurement gap configuration may be configured as a per-UE gap. In a case that the measurement gap configuration is used for the measurement gap at the FR level, it may be understood that the measurement gap configuration may be configured as a per-PR gap.

Optionally, in some embodiments, in a case that the first measurement is conducted in the first gap, only a reference signal associated with the first measurement and a signal of a random access procedure are received in the first gap.

Optionally, the reference signal associated with the first measurement may include at least one of the following: an RLM reference signal, an L1-RSRP reference signal, a BFD reference signal, and a CBD reference signal.

Optionally, in some embodiments, the second measurement may be layer 3 measurement.

For better understanding of the disclosure, detailed description will be provided below through some examples.

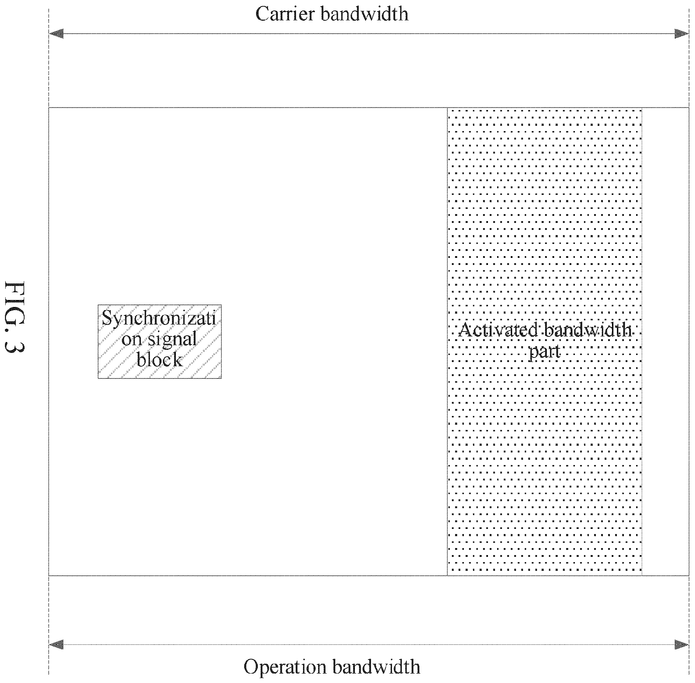

In some embodiments, the terminal determines that a frequency domain position of the SSB is not included in a bandwidth of the activated BWP according to the received configuration information of the first serving cell. In this case, the terminal sets the operation bandwidth according to the configured carrier bandwidth instead of setting the operation bandwidth according to the BWP, as shown in FIG. 3.

Optionally, the case is the same as a case in which the activated BWP includes the SSB. The SSB is included in the operation bandwidth of the terminal. All layer 1 measurement based on the SSB may be conducted outside the measurement gap. Moreover, any RLM/L1-RSRP/BFD/CBD layer 1 measurement based on the SSB does not cause interruption in any serving cell. Any layer 1 measurement of RLM/L1-RSRP/BFD/CBD based on the SSB and downlink timing has a same measurement limitation as a case that the SSB is located in the activated BWP. Any layer 1 measurement of RLM/L1-RSRP/BFD/CBD based on the SSB and downlink timing has a same scheduling limitation as a case that the SSB is located in the activated BWP.

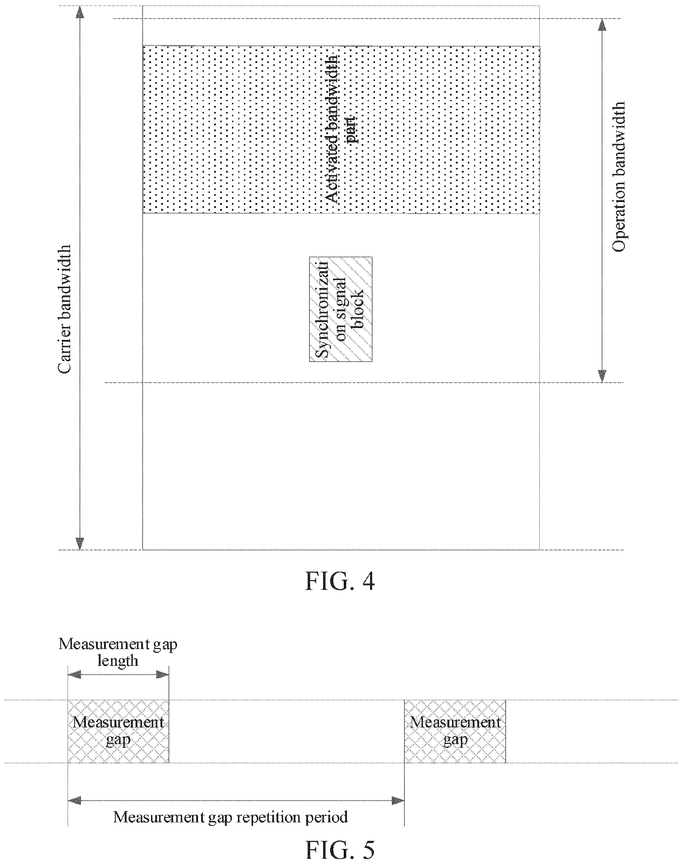

In some embodiments, the terminal determines that the frequency domain position of the SSB is not included in the bandwidth of the activated BWP according to received serving cell configuration information. In this case, the terminal no longer sets the operation bandwidth according to the BWP, and does not set the operation bandwidth according to the configured carrier bandwidth. The bandwidth of the activated BWP may be extended to include the SSB. In this case, the bandwidth of the activated BWP is extended to include the bandwidth of the SSB and is referred to as an extended bandwidth of the activated BWP. The extended bandwidth of the activated BWP is much smaller than the carrier bandwidth. In this case, the operation bandwidth may be set according to the extended bandwidth of the activated BWP. Details are shown in FIG. 4.

Optionally, the case is the same as a case in which the activated BWP includes the SSB. The SSB is included in the operation bandwidth of the terminal. All layer 1 measurement based on the SSB may be conducted outside the measurement gap. Moreover, any RLM/L1-RSRP/BFD/CBD layer 1 measurement based on the SSB does not cause interruption in any serving cell. Any layer 1 measurement of RLM/L1-RSRP/BFD/CBD based on the SSB and downlink timing has a same measurement limitation as a case that the SSB is located in the activated BWP. Any layer 1 measurement of RLM/L1-RSRP/BFD/CBD based on the SSB and downlink timing has a same scheduling limitation as a case that the SSB is located in the activated BWP.

Optionally, in some embodiments, implementation of some terminals is not intended to extend the bandwidth of the activated BWP so as to save power, or some terminals are incapable of extending the bandwidth of the BWP to include the bandwidth of the SSB, such as a RedCap terminal. In this case, the terminal supports the layer 1 measurement based on the measurement gap through capability indication. The network may configure the measurement gap for the terminal accordingly. A basic measurement gap pattern is shown in FIG. 5. The measurement gap is determined through the MGRP and the MGL. A specific position further needs to be indicated by an offset from a system frame number (System frame number, SFN).

Optionally, if the measurement gap is required by the layer 1 measurement based on the SSB, the corresponding layer 3 measurement based on the SSB also requires a measurement gap. The layer 1 measurement is based on a period of the SSB. Intra-frequency measurement of layer 3 is based on a period of an SS/PBCH block measurement timing configuration (SS/PBCH block Measurement Timing Configuration, SMTC). In addition, the period of the SMTC is longer than or equal to the period of the SSB. There are various methods for configuring a measurement gap.

An optional method is as follows: Only one measurement gap pattern is configured, and is used for both layer 1 measurement and layer 3 measurement.

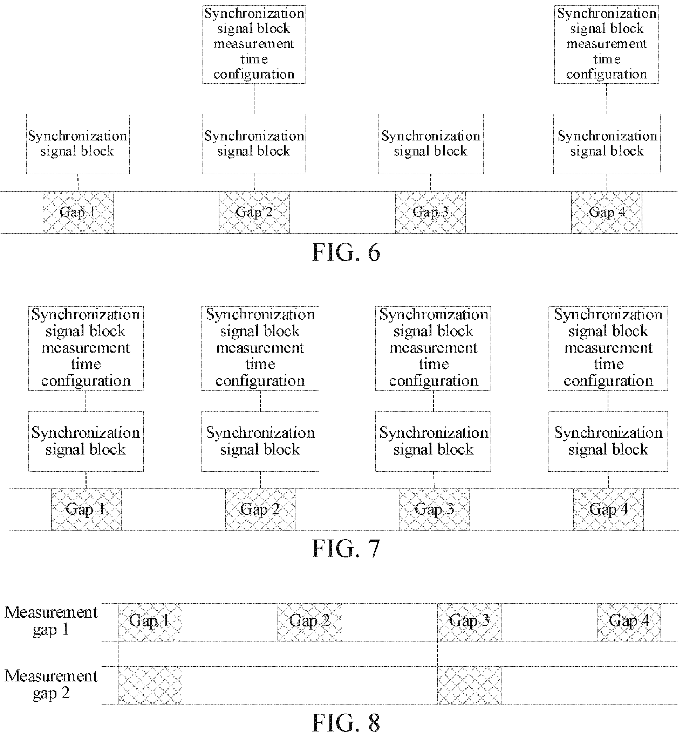

Optionally, if a period of an SSB is shorter than a period of an SMTC, as shown in FIG. 6, and for example, the period of the SSB is 20 ms and the period of the SMTC is 40 ms, the layer 1 measurement based on the SSB is conducted only in a measurement gap that does not overlap with a position of the SMTC, and the layer 3 measurement based on the SSB is conducted in a measurement gap corresponding to the position of the SMTC.

If a period of an SSB is the same as a period of an SMTC, as shown in FIG. 7, measurement gaps are allocated to the layer 1 measurement and the layer 3 measurement based on the SSB according to a particular ratio, and for example, according to a ratio of 1:2. One of 3 measurement gaps is used for the layer 1 measurement, and the other two measurement gaps are used for the layer 3 measurement.

The allocation ratio may be fixedly allocated, or may be specified through a measurement gap configuration.

An optional method is as follows: Two measurement gap patterns are configured. As shown in FIG. 8, one of the measurement gap patterns is used for layer 1 measurement, and the other measurement gap is used for layer 3 measurement.

For example, a measurement gap pattern 1 is used for the layer 1 measurement, and a measurement gap 2 is used for the layer 3 measurement. In a case that a period of the measurement gap pattern 1 is shorter than that of the measurement gap pattern 2, the layer 1 measurement is conducted in a measurement gap that does not overlap with the measurement gap for the layer 3 measurement, such as a gap 2 and a gap 4 shown in FIG. 8.

An optional method is as follows: A plurality of measurement gap patterns are configured and used for a plurality of types of measurement, such as layer 1 measurement, layer 3 measurement, positioning measurement, multiple universal subscriber identity module (Multi-USIM, MUSIM) measurement, and non-terrestrial networks (Non-Terrestrial Networks, NTN) measurement. As shown in FIG. 8, one measurement gap pattern is used for the layer 1 measurement, and another measurement gap is used for the layer 3 measurement.

If a measurement gap of layer 1 has a position that does not overlap with another measurement gap, the layer 1 measurement is conducted in a slot on which the measurement gaps do not overlap with each other. If the measurement gap of the layer 1 and a measurement gap of layer 3 conflict with each other, whether the layer 1 measurement needs to be conducted in the measurement gap is determined according to an indicated measurement gap priority.

Optionally, in some embodiments, some terminals may conduct parallel measurement with additional hardware resources and software resources in a specific condition. After receiving RRC configuration and re-configuration messages, the terminals determine that even if a bandwidth of an activated BWP is not adjusted in this case, the measurement gap may not be required to conduct the layer 1 measurement.

One method is to indicate that layer 1 measurement does not require a measurement gap through new signaling. All layer 1 measurement based on the SSB may be conducted outside the measurement gap. Moreover, RLM/L1-RSRP/BFD/CBD layer 1 measurement based on the SSB may cause interruption in other serving cells. Interruption occurs before and after a symbol of the SSB of the layer 1 measurement. The scheduling limitation and the measurement limitation are the same as those of a case that the SSB is in the activated BWP.

Another method is to indicate no-gap by a terminal through *intraFreq-needForGap.* It indicates that the terminal does not require a measurement gap to conduct layer 3 measurement based on an SSB other than an activated BWP. Similarly, it may be indicated that the terminal does not require a measurement gap to conduct layer 1 measurement based on the same SSB. All layer 1 measurement based on the SSB may be conducted outside the measurement gap. Moreover, RLM/L1-RSRP/BFD/CBD layer 1 measurement based on the SSB may cause interruption in other serving cells. Interruption occurs before and after a symbol of the SSB of the layer 1 measurement. The scheduling limitation and the measurement limitation are the same as those of a case that the SSB is in the activated BWP.

Another method is to indicate nogap-noncsg by a terminal through *intraFreq-needForNCSG.* It indicates that the terminal does not require a measurement gap to conduct layer 3 measurement based on an SSB other than an activated BWP, and the measurement is not interrupted in any other serving cell. Similarly, it may be indicated that the terminal does not require a measurement gap to conduct layer 1 measurement based on the same SSB. All layer 1 measurement based on the SSB may be conducted outside the measurement gap, and the measurement is not interrupted in other serving cells. The scheduling limitation and the measurement limitation are the same as those of a case that the SSB is in the activated BWP.

Optionally, in some embodiments, after receiving RRC configuration and re-configuration messages, the terminal determines that the measurement gap is required in this case to conduct the layer 1 measurement.

One method is to indicate that layer 1 measurement requires a measurement gap through the new signaling in the embodiment.

Another method is to indicate gap by a terminal through *intraFreq-needForGap.* It indicates that the terminal requires a measurement gap to conduct layer 3 measurement based on an SSB other than an activated BWP. Similarly, it may be indicated that the terminal requires a measurement gap to conduct layer 1 measurement based on the same SSB.

Another method is to indicate gap by a terminal through *intraFreq-needForNCSG.* It indicates that the terminal requires a measurement gap to conduct layer 3 measurement based on an SSB other than an activated BWP. Similarly, it may be indicated that the terminal requires a measurement gap to conduct layer 1 measurement based on the same SSB.

After the terminal indicates that the measurement gap is required, configuration of the measurement gap and measurement are conducted according to the embodiment based on gap measurement.

It should be noted that the terminal may indicate ncsg through *intraFreq-needForNCSG.* It indicates that the terminal requires only a visible measurement gap to conduct layer 3 measurement based on an SSB other than an activated BWP. Similarly, it may be indicated that the terminal requires only a visible measurement gap to conduct layer 1 measurement based on the same SSB. The measurement gap for the layer 1 measurement may be configured as an NCSG instead of a conventional measurement gap.

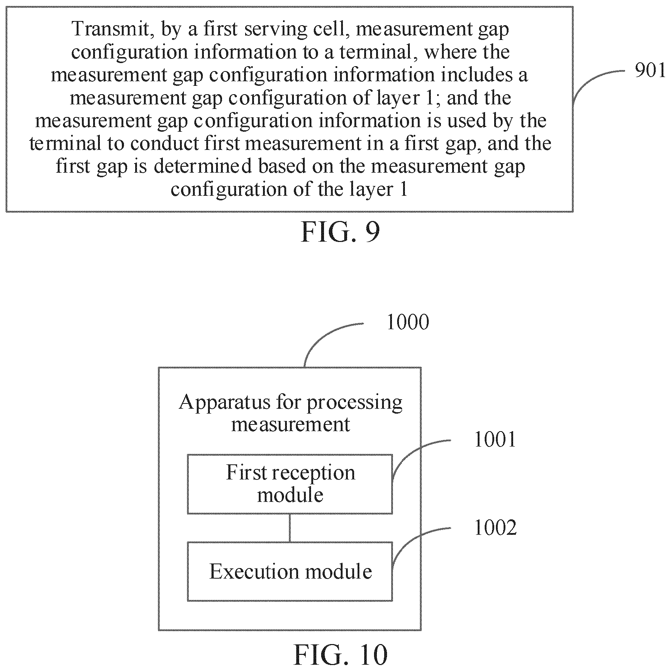

With reference to FIG. 9, an embodiment of the disclosure further provides a method for processing measurement. As shown in FIG. 9, the method for processing measurement includes:
Step 901, measurement gap configuration information is transmitted to a terminal by a first serving cell, where the measurement gap configuration information includes a measurement gap configuration of layer 1. The measurement gap configuration information is used by the terminal to conduct first measurement in a first gap. The first gap is determined based on the measurement gap configuration of the layer 1.

Optionally, the step that the measurement gap configuration information is transmitted to the terminal by the first serving cell includes:
first configuration information is transmitted to the terminal by the first serving cell;
in a case that a first signal determined and configured by the terminal based on the first configuration information is at least partially located in an activated bandwidth part (BWP) of the first serving cell, first indication information is received from the terminal by the first serving cell; and
in a case that the first indication information indicates that the first gap needs to be configured, the measurement gap configuration information is transmitted to the terminal by the first serving cell.

The first signal includes a synchronization signal block (SSB) or a channel state information reference signal (CSI-RS).

Optionally, in a case that the first indication information indicates that the first gap needs to be configured, and the first gap is a network controlled small gap, the measurement gap configuration of the layer 1 is a network controlled small gap pattern configuration.

Optionally, the first indication information is carried by any one of the following signaling:
first signaling, where the first signaling is signaling used to indicate whether the network controlled small gap is required by intra-frequency measurement;
second signaling, where the second signaling is signaling used to indicate whether a gap is required by the intra-frequency measurement; and
third signaling, where the third signaling is signaling specially used to indicate whether the first gap needs to be configured for layer 1 measurement.

Optionally, in a case that the first signal is the SSB, the first configuration information includes any one of the following:
BWP configuration information and SSB configuration information; and
BWP configuration information, SSB configuration information, and carrier bandwidth configuration information.

Optionally, the measurement gap configuration information includes at least one measurement gap configuration. The measurement gap configuration includes a measurement gap repetition period, a measurement gap length, a measurement gap offset, and a measurement gap timing advance.

Optionally, the measurement gap configuration further includes at least one of the following:
a measurement gap priority;
measurement gap allocation information; and
a measurement type associated with the measurement gap.

Optionally, the measurement gap configuration information satisfies at least one of the following conditions:
in a case that the measurement gap configuration information includes one measurement gap configuration, the measurement gap configuration is used for the first measurement, and alternatively, the measurement gap configuration is used for the first measurement and the second measurement; and
in a case that the measurement gap configuration information includes at least two measurement gap configurations, the measurement gap configurations further include measurement types associated with the measurement gap.

Optionally, the first measurement includes at least one of the following:
downlink timing measurement, reference signal received power measurement of the layer 1, radio link monitoring measurement, beam failure detection (BFD) measurement, and candidate beam detection (CBD) measurement.

Optionally, the second measurement is layer 3 measurement.

An execution body of the method for processing measurement according to the embodiment of the disclosure may be an apparatus for processing measurement. In the embodiment of the disclosure, the apparatus for processing measurement according to the embodiment of the disclosure is illustrated with the apparatus for processing measurement to execute the method for processing measurement as an example.

With reference to FIG. 10, an embodiment of the disclosure further provides an apparatus for processing measurement. As shown in FIG. 10, the apparatus 1000 for processing measurement includes:
a first reception module 1001 used to receive first information from a first serving cell; and
an execution module 1002 used to execute a first operation.

The first operation includes any one of the following operations:
operation 1, in a case that the first information includes first configuration information, first indication information indicating whether a first gap needs to be configured is transmitted to the first serving cell based on the first configuration information, where the first indication information is determined based on the first configuration information, and the first gap is a measurement gap for first measurement;
operation 2, in a case that the first information includes first configuration information, and it is determined based on the first configuration information that a configured first signal is at least partially located in an activated bandwidth part (BWP) of the first serving cell, first measurement is conducted outside a second gap, and alternatively, first measurement is conducted not based on a measurement gap;
operation 3, in a case that the first information includes measurement gap configuration information, first measurement is conducted in a first gap, where the first gap is determined based on the measurement gap configuration information; and
operation 4, first indication information indicating whether a first gap needs to be configured is transmitted to the first serving cell based on the first information, where the first gap is a measurement gap for first measurement.

The second gap is a measurement gap for second measurement other than the first measurement. The first measurement is layer 1 measurement. The first signal includes a synchronization signal block (SSB) or a channel state information reference signal (CSI-RS).

Optionally, in a case that the first operation includes the operation 4, the first information includes at least one of the following: a capability inquiry request message, a radio resource control (RRC) connection establishment message, and an RRC connection recovery message.

Optionally, in a case that the first indication information indicates that the first gap needs to be configured, the operation 1 and/or the operation 4 further include/includes:
the measurement gap configuration information is received from the first serving cell, where the measurement gap configuration information includes a measurement gap configuration of layer 1; and
the first measurement is conducted in the first gap, where the first gap is determined based on the measurement gap configuration of the layer 1.

Optionally, in a case that the first indication information indicates that the first gap needs to be configured, and the first gap is a network controlled small gap, the measurement gap configuration of the layer 1 is a network controlled small gap pattern configuration.

Optionally, the first indication information is carried by any one of the following signaling:
first signaling, where the first signaling is signaling used to indicate whether the network controlled small gap is required by intra-frequency measurement;
second signaling, where the second signaling is signaling used to indicate whether a gap is required by the intra-frequency measurement; and
third signaling, where the third signaling is signaling specially used to indicate whether the first gap needs to be configured for layer 1 measurement.

Optionally, in a case that the first indication information indicates that the first gap does not need to be configured, an interruption behavior of a second serving cell satisfies at least one of the following conditions:
in a case that the first indication information is carried by the first signaling, the second serving cell does not allow interruption to occur; and
in a case that the first indication information is carried by the second signaling or the third signaling, the second serving cell does not allow interruption to occur, and alternatively, interruption of the second serving cell is located before and after a symbol where the first signal of the first measurement is located.

The second serving cell is a serving cell other than the first serving cell of at least two serving cells connected to the terminal.

Optionally, in a case that the first signal is the SSB, the first configuration information includes any one of the following:
BWP configuration information and SSB configuration information; and
BWP configuration information, SSB configuration information, and carrier bandwidth configuration information.

Optionally, in a case that the first indication information is carried by first signaling or second signaling, the first configuration information further includes at least one of the following:
carrier aggregation (CA) configuration information; and
multiple-input multiple-output (MIMO) configuration information.

The first signaling is signaling used to indicate whether a network controlled small gap is required by intra-frequency measurement. The second signaling is signaling used to indicate whether a gap is required by the intra-frequency measurement.

Optionally, the SSB configured by the SSB configuration information is at least partially located outside the activated BWP of the first serving cell.

Optionally, the first measurement satisfies at least one of the following conditions:
in a case that the first operation includes the operation 2, the first measurement satisfies a first limiting condition; and
in a case that the first operation includes the operation 1 or the operation 4, and the first indication information indicates that the first gap does not need to be configured, the first measurement satisfies the first limiting condition.

The first limiting condition includes at least one of the following conditions:
the first measurement has a same measurement limitation as the layer 1 measurement in a case of satisfying a first condition; and
the first measurement has a same scheduling limitation as the layer 1 measurement in a case of satisfying the first condition.

The first condition includes: the configured SSB is located in the activated BWP of the first serving cell.

Optionally, an operation bandwidth of the terminal is determined based on any one of the following:
the activated BWP of the first serving cell and the SSB configured by the SSB configuration information; and
the carrier bandwidth configuration information.

Optionally, in a case that the first operation includes the operation 2, the first measurement does not cause interruption of the second serving cell, and the second serving cell is a different serving cell except for the first serving cell of at least two serving cells connected to the terminal.

Optionally, the measurement gap configuration information includes at least one measurement gap configuration. The measurement gap configuration includes a measurement gap repetition period, a measurement gap length, a measurement gap offset, and a measurement gap timing advance.

Optionally, the measurement gap configuration further includes at least one of the following:
a measurement gap priority;
measurement gap allocation information; and
a measurement type associated with the measurement gap.

Optionally, the measurement gap configuration information satisfies at least one of the following conditions:
in a case that the measurement gap configuration information includes one measurement gap configuration, the measurement gap configuration is used for the first measurement, and alternatively, the measurement gap configuration is used for the first measurement and the second measurement; and
in a case that the measurement gap configuration information includes at least two measurement gap configurations, the measurement gap configurations further include measurement types associated with the measurement gap.

Optionally, in a case that the measurement gap configuration information includes the one measurement gap configuration, and the measurement gap configuration is used for the first measurement and the second measurement, the apparatus for processing measurement further includes a determination module. The determination module is used to execute any one of the following:
the first gap used for the first measurement and the second gap used for the second measurement in the measurement gap corresponding to the measurement gap configuration are determined based on a first allocation ratio, where the first allocation ratio is an allocation ratio agreed by a protocol, or an allocation ratio indicated by measurement gap allocation information included by the measurement gap configuration; and
the first gap used for the first measurement and the second gap used for the second measurement in the measurement gap corresponding to the measurement gap configuration are determined, where only the first measurement is included in the first gap, the first measurement and the second measurement are included in the second gap, and the first measurement and the second measurement conflict with each other in the second gap.

Optionally, in a case that the measurement gap configuration information includes at least two measurement gap configurations, and a measurement gap repetition period of the first measurement is shorter than a measurement gap repetition period of the second measurement, the first measurement satisfies either one of the following conditions:
the first measurement is conducted in the first gap that does not conflict with the second gap; and
in a case that the first gap and the second gap conflict with each other, whether to conduct the first measurement in the first gap is determined according to a measurement gap priority.

Optionally, the measurement gap configuration is used to configure a measurement gap at a terminal level or used to configure a measurement gap at a frequency range (FR) level.

Optionally, in a case that the first measurement is conducted in the first gap, only a reference signal associated with the first measurement and a signal of a random access procedure are received in the first gap.

Optionally, the first measurement includes at least one of the following:
downlink timing measurement, reference signal received power measurement of the layer 1, radio link monitoring measurement, beam failure detection (BFD) measurement, and candidate beam detection (CBD) measurement.

Optionally, the second measurement is layer 3 measurement.

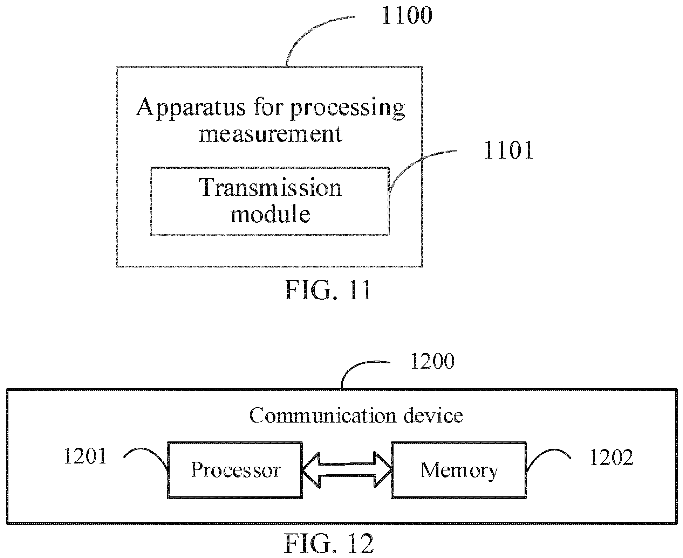

With reference to FIG. 11, an embodiment of the disclosure further provides an apparatus for processing measurement. As shown in FIG. 11, the apparatus 1100 for processing measurement includes:
a transmission module 1101 used to transmit measurement gap configuration information to a terminal. The measurement gap configuration information includes a measurement gap configuration of layer 1. The measurement gap configuration information is used by the terminal to conduct first measurement in a first gap. The first gap is determined based on the measurement gap configuration of the layer 1.

Optionally, the apparatus for processing measurement further includes a second reception module.

The transmission module 1101 is further used to transmit the first configuration information to the terminal.

The second reception module is configured to receive, in a case that a first signal determined and configured by the terminal based on the first configuration information is at least partially located in an activated bandwidth part (BWP) of the first serving cell, the first indication information from the terminal by the first serving cell.

The transmission module 1101 is specifically used to transmit, in a case that the first indication information indicates that the first gap needs to be configured, the measurement gap configuration information to the terminal.

The first signal includes a synchronization signal block (SSB) or a channel state information reference signal (CSI-RS).

Optionally, in a case that the first indication information indicates that the first gap needs to be configured, and the first gap is a network controlled small gap, the measurement gap configuration of the layer 1 is a network controlled small gap pattern configuration.

Optionally, the first indication information is carried by any one of the following signaling:
first signaling, where the first signaling is signaling used to indicate whether the network controlled small gap is required by intra-frequency measurement;
second signaling, where the second signaling is signaling used to indicate whether a gap is required by the intra-frequency measurement; and
third signaling, where the third signaling is signaling specially used to indicate whether the first gap needs to be configured for layer 1 measurement.

Optionally, in a case that the first signal is the SSB, the first configuration information includes any one of the following:
BWP configuration information and SSB configuration information; and
BWP configuration information, SSB configuration information, and carrier bandwidth configuration information.

Optionally, the measurement gap configuration information includes at least one measurement gap configuration. The measurement gap configuration includes a measurement gap repetition period, a measurement gap length, a measurement gap offset, and a measurement gap timing advance.

Optionally, the measurement gap configuration further includes at least one of the following:
a measurement gap priority;
measurement gap allocation information; and
a measurement type associated with the measurement gap.

Optionally, the measurement gap configuration information satisfies at least one of the following conditions:
in a case that the measurement gap configuration information includes one measurement gap configuration, the measurement gap configuration is used for the first measurement and second measurement; and
in a case that the measurement gap configuration information includes at least two measurement gap configurations, the measurement gap configurations further include measurement types associated with the measurement gap.

Optionally, the first measurement includes at least one of the following:
downlink timing measurement, reference signal received power measurement of the layer 1, radio link monitoring measurement, beam failure detection (BFD) measurement, and candidate beam detection (CBD) measurement.

Optionally, the second measurement is layer 3 measurement.

The apparatus for processing measurement in the embodiment of the disclosure may be an electronic device, and for example, an electronic device having an operating system, or may be a component in an electronic device, and for example, an integrated circuit or a chip. The electronic device may be a terminal, or may be another device other than a terminal. For example, the terminal may include, but is not limited to, types of the terminal 11 listed above. Another device may be a server, a network attached storage (Network Attached Storage, NAS), etc., and is not specifically limited by the embodiment of the disclosure.

The apparatus for processing measurement according to the embodiment of the disclosure can implement all processes implemented in the method embodiments of FIG. 2 to FIG. 9, and achieve same technical effects. To avoid repetition, details will not be repeated herein.

Optionally, as shown in FIG. 12, an embodiment of the disclosure further provides a communication device 1200. The communication device includes a processor 1201 and a memory 1202. The memory 1202 stores a program or an instruction runnable on the processor 1201. When the program or the instruction is executed by the processor 1201, all steps of the embodiment of the method for processing measurement are implemented, and same technical effects can be achieved. To avoid repetition, details will not be repeated herein.

An embodiment of the disclosure further provides a terminal. The terminal includes a processor and a communication interface. The communication interface is used to receive first information from a first serving cell; and execute a first operation.

The first operation includes any one of the following operations:
operation 1, in a case that the first information includes first configuration information, first indication information indicating whether a first gap needs to be configured is transmitted to the first serving cell based on the first configuration information, where the first indication information is determined based on the first configuration information, and the first gap is a measurement gap for first measurement;
operation 2, in a case that the first information includes first configuration information, and it is determined based on the first configuration information that a configured first signal is at least partially located in an activated bandwidth part (BWP) of the first serving cell, first measurement is conducted outside a second gap, and alternatively, first measurement is conducted not based on a measurement gap;
operation 3, in a case that the first information includes measurement gap configuration information, first measurement is conducted in a first gap, where the first gap is determined based on the measurement gap configuration information; and
operation 4, first indication information indicating whether a first gap needs to be configured is transmitted to the first serving cell based on the first information, where the first gap is a measurement gap for first measurement.

The second gap is a measurement gap for second measurement other than the first measurement. The first measurement is layer 1 measurement. The first signal includes a synchronization signal block (SSB) or a channel state information reference signal (CSI-RS).

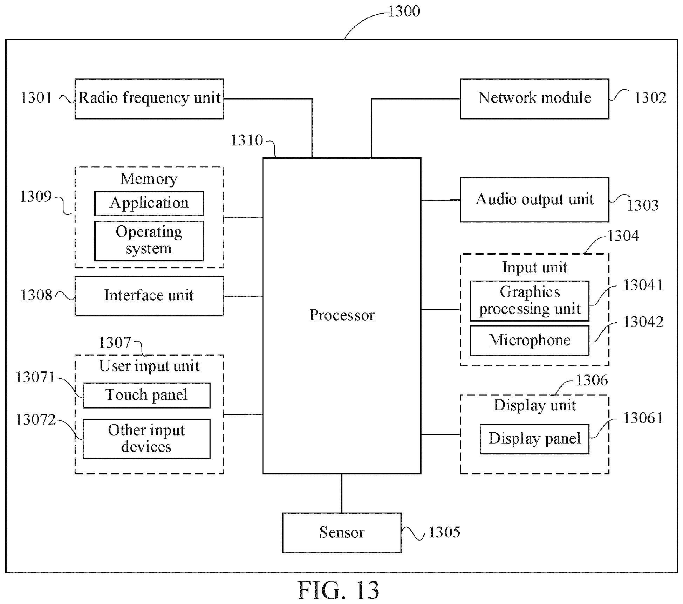

The embodiment of the terminal corresponds to the embodiment of a terminal side method described above. All implementation processes and implementations of the method embodiment may be applied to the embodiment of the terminal, and can achieve same technical effects. Specifically, FIG. 13 is a schematic diagram of a hardware structure of a terminal for implementing an embodiment of the disclosure.

The terminal 1300 includes, but is not limited to: at least some of components such as a radio frequency unit 1301, a network module 1302, an audio output unit 1303, an input unit 1304, a sensor 1305, a display unit 1306, a user input unit 1307, an interface unit 1308, a memory 1309, and a processor 1310.

Those skilled in the art can understand that the terminal 1300 may further include a power supply (for example, a battery) for supplying power to all components, and the power supply may be logically connected to the processor 1310 through a power management system, such that functions such as charging, discharging, and power consumption management are achieved through the power management system. A terminal structure shown in FIG. 13 does not limit the terminal. The terminal may include more or fewer components than those shown in the figure, combine some components, or have different component arrangements, which will not be repeated herein.

It should be understood that, in the embodiment of the disclosure, the input unit 1304 may include a graphics processing unit (Graphics Processing Unit, GPU) 13041 and a microphone 13042. The graphics processing unit 13041 processes image data of a static picture or a video obtained by an image capture apparatus (for example, a camera) in a video capture mode or an image capture mode. The display unit 1306 may include a display panel 13061. The display panel 13061 may be configured in a form of a liquid crystal display, an organic light-emitting diode, etc. The user input unit 1307 includes a touch panel 13071 and at least one of other input devices 13072. The touch panel 13071 is also referred to as a touchscreen. The touch panel 13071 may include two parts: a touch sensing apparatus and a touch controller. The other input devices 13072 may include, but are not limited to, a physical keyboard, a functional key (for example, a volume control key or a switch key), a track ball, a mouse, and a joystick, which will not be repeated herein.

In the embodiment of the disclosure, after the radio frequency unit 1301 receives downlink data from a network side device, the data may be transmitted to the processor 1310 for processing. In addition, the radio frequency unit 1301 may transmit uplink data to the network side device. Generally, the radio frequency unit 1301 includes, but is not limited to, an antenna, an amplifier, a transceiver, a coupler, a low noise amplifier, a duplexer, etc.

The memory 1309 may be used to store a software program or instruction and various data. The memory 1309 may mainly include a first storage zone for storing the program or the instruction and a second storage zone for storing data. The first storage zone may store an operating system, an application or an instruction required by at least one function (for example, a sound playback function and an image display function), etc. In addition, the memory 1309 may be a volatile memory or a non-volatile memory, or the memory 1309 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct Rambus random access memory (Direct Rambus RAM, DRRAM). The memory 1309 in the embodiment of the disclosure includes, but is not limited to, the memories and any other suitable types of memories.

The processor 1310 may include one or more processing units. Optionally, the processor 1310 integrates an application processor and a modem processor. The application processor mainly processes operations relating to an operating system, a user interface, an application, etc., and the modem processor, such as a baseband processor, mainly processes a radio communication signal. It may be understood that the modem processor may either not be integrated into the processor 1310.

The radio frequency unit 1301 is used to receive first information from a first serving cell; and execute a first operation.

The first operation includes any one of the following operations:
operation 1, in a case that the first information includes first configuration information, first indication information indicating whether a first gap needs to be configured is transmitted to the first serving cell based on the first configuration information, where the first indication information is determined based on the first configuration information, and the first gap is a measurement gap for first measurement;
operation 2, in a case that the first information includes first configuration information, and it is determined based on the first configuration information that a configured first signal is at least partially located in an activated bandwidth part (BWP) of the first serving cell, first measurement is conducted outside a second gap, and alternatively, first measurement is conducted not based on a measurement gap;
operation 3, in a case that the first information includes measurement gap configuration information, first measurement is conducted in a first gap, where the first gap is determined based on the measurement gap configuration information; and
operation 4, first indication information indicating whether a first gap needs to be configured is transmitted to the first serving cell based on the first information, where the first gap is a measurement gap for first measurement.

The second gap is a measurement gap for second measurement other than the first measurement. The first measurement is layer 1 measurement. The first signal includes a synchronization signal block (SSB) or a channel state information reference signal (CSI-RS).

In the embodiment of the disclosure, the first information is received from the first serving cell, and the first operation is executed based on the first information, such that a behavior related to the layer 1 measurement is clarified. Since the layer 1 measurement in the embodiment of the disclosure may be located in a currently activated BWP or outside the activated BWP, flexibility of the layer 1 measurement is improved. Meanwhile, the layer 1 measurement may be conducted outside the activated BWP, such that terminals supporting bwp-WithoutRestriction or similar capabilities can be applied to a network, and high terminal and system performance can be guaranteed.

An embodiment of the disclosure further provides a network side device. The network side device includes a processor and a communication interface. The communication interface is used to transmit measurement gap configuration information to a terminal. The measurement gap configuration information includes a measurement gap configuration of layer 1. The measurement gap configuration information is used by the terminal to conduct first measurement in a first gap. The first gap is determined based on the measurement gap configuration of the layer 1. The embodiment of the network side device corresponds to the method embodiment of the network side device. Various implementation processes and implementations of the method embodiment may be all applied to the embodiment of the network side device and can achieve same technical effects.

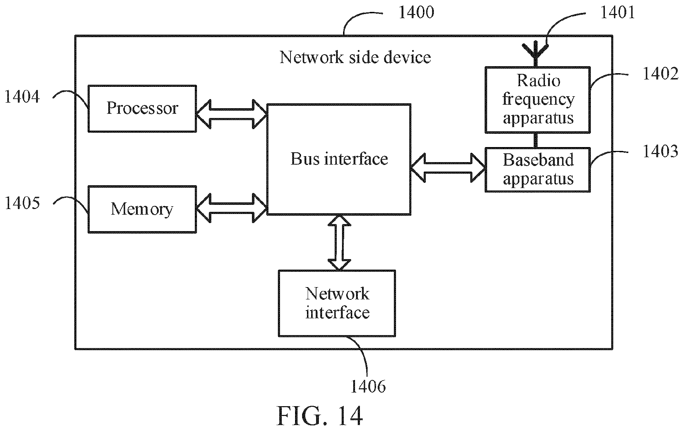

Specifically, an embodiment of the disclosure further provides a network side device. As shown in FIG. 14, the network side device 1400 includes: an antenna 1401, a radio frequency apparatus 1402, a baseband apparatus 1403, a processor 1404, and a memory 1405. The antenna 1401 is connected to the radio frequency apparatus 1402. In an uplink direction, the radio frequency apparatus 1402 receives information through the antenna 1401, and transmits the received information to the baseband apparatus 1403 for processing. In a downlink direction, the baseband apparatus 1403 processes to-be-transmitted information, and transmits the information to the radio frequency apparatus 1402. The radio frequency apparatus 1402 processes the received information and then transmits the information through the antenna 1401.

In the embodiment, the method executed by the network side device may be implemented in the baseband apparatus 1403. The baseband apparatus 1403 includes a baseband processor.

The baseband apparatus 1403 may include, for example, at least one baseband board. The baseband board is provided with a plurality of chips. As shown in FIG. 14, one of the chips is a baseband processor for example, and is connected to the memory 1405 through a bus interface, such that a program in the memory 1405 is invoked to execute operations of a network device shown in the method embodiment.

The network side device may further include a network interface 1406. The interface is, for example, a common public radio interface (common public radio interface, CPRI).

Specifically, the network side device 1400 of the embodiment of the disclosure further includes: an instruction or a program stored in the memory 1405 and runnable on the processor 1404. The processor 1404 invokes the instruction or the program in the memory 1405 to execute the method executed by each module shown in FIG. 11, and achieves a same technical effect. To avoid repetition, details will not be repeated herein.

An embodiment of the disclosure further provides a readable storage medium. The readable storage medium stores a program or an instruction. When the program or the instruction is executed by a processor, all processes of the embodiment of the method for processing measurement are implemented, and same technical effects can be achieved. To avoid repetition, details will not be repeated herein.

The processor is a processor of the terminal of the embodiment. The readable storage medium includes a computer-readable storage medium, such as a computer read-only memory (ROM), a random access memory (RAM), a magnetic disk, or an optical disk.

An embodiment of the disclosure further provides a chip. The chip includes a processor and a communication interface. The communication interface is coupled to the processor. The processor is used to run a program or an instruction, such that all processes of the embodiment of the method for processing measurement are implemented, and same technical effects can be achieved. To avoid repetition, details will not be repeated herein.

It should be understood that the chip mentioned in the embodiment of the disclosure may alternatively be referred to as a system on a chip, a system chip, a chip system, a system-on-chip, etc.

An embodiment of the disclosure further provides a computer program/program product. The computer program/program product is stored in a storage medium. The computer program/program product is executed by at least one processor, such that all processes of the embodiment of the method for processing measurement are implemented, and same technical effects can be achieved. To avoid repetition, details will not be repeated herein.

An embodiment of the disclosure further provides a communication system. The communication system includes: a terminal and a network side device. The terminal is used to execute all processes in FIG. 2 and all method embodiments of the terminal. The network side device is used to execute all processes in FIG. 9 and all method embodiments of the network side device, and can achieve a same technical effect. To avoid repetition, details will not be repeated herein.

It should be noted that terms "include", "comprise", "involve", or their any other variations herein are intended to cover non-exclusive inclusions, such that a process, a method, an article, or an apparatus including a series of elements not only includes those elements, but also includes other elements that are not explicitly listed, or also includes inherent elements of the process, the method, the article, or the apparatus. Without more restrictions, the elements defined by the sentence "including a ..." or "comprising a ..." do not exclude existence of other identical elements in the process, the method, the article, or the apparatus including the elements. In addition, it should be noted that a range of the method and the apparatus in an implementation of the disclosure is not restricted to execution of functions in order shown or discussed, and may further include execution of functions involved in a substantially simultaneous manner or in reverse order. For example, the method described may be executed in order different from that described, and various steps may be added, omitted, or combined. Moreover, features described with reference to some examples may be combined in other examples.

From description of the implementation, those skilled in the art may clearly understand that the methods of the embodiments may be implemented by means of software plus a necessary general-purpose hardware platform, or by means of hardware. In many cases, the former is a better implementation. With such understanding, the technical solution of the disclosure, in essence or from the view of part contributing to the prior art, may be embodied in a form of a computer software product. The computer software product is stored in a storage medium (such as an ROM/RAM, a magnetic disk, and an optical disk) and includes several instructions used to enable a terminal (which may be a mobile phone, a computer, a server, an air conditioner, a network device, etc.) to execute the method according to each embodiment of the disclosure.

The embodiments of the disclosure are described above with reference to the accompanying drawings, but the disclosure is not restricted to the above specific implementations. The specific implementations are merely illustrative rather than restrictive. Inspired by the disclosure, those of ordinary skill in the art may still make many forms without departing from the essence of the disclosure and the protection scope of the claims, which all fall within protection of the disclosure.

## Claims

1. A method for processing measurement, comprising:
receiving, by a terminal, first information from a first serving cell; and
executing a first operation by the terminal, wherein
the first operation comprises any one of the following operations:
operation 1, in a case that the first information comprises first configuration information, first indication information indicating whether a first gap needs to be configured is transmitted to the first serving cell based on the first configuration information, wherein the first indication information is determined based on the first configuration information, and the first gap is a measurement gap for first measurement;
operation 2, in a case that the first information comprises first configuration information, and it is determined based on the first configuration information that a configured first signal is at least partially located in an activated bandwidth part (BWP) of the first serving cell, first measurement is conducted outside a second gap, and alternatively, first measurement is conducted not based on a measurement gap;
operation 3, in a case that the first information comprises measurement gap configuration information, first measurement is conducted in a first gap, wherein the first gap is determined based on the measurement gap configuration information; and
operation 4, first indication information indicating whether a first gap needs to be configured is transmitted to the first serving cell based on the first information, wherein the first gap is a measurement gap for first measurement, wherein
the second gap is a measurement gap for second measurement other than the first measurement, the first measurement is layer 1 measurement, and the first signal comprises a synchronization signal block (SSB) or a channel state information reference signal (CSI-RS).

2. The method according to claim 1, wherein in a case that the first operation comprises the operation 4, the first information comprises at least one of the following: a capability inquiry request message, a radio resource control (RRC) connection establishment message, and an RRC connection recovery message.

3. The method according to claim 1, further comprising:
receiving the measurement gap configuration information from the first serving cell, wherein the measurement gap configuration information comprises a measurement gap configuration of layer 1; and
conducting the first measurement in the first gap, wherein the first gap is determined based on the measurement gap configuration of the layer 1.

4. The method according to claim 3, wherein in a case that the first indication information indicates that the first gap needs to be configured, and the first gap is a network controlled small gap, the measurement gap configuration of the layer 1 is a network controlled small gap pattern configuration.

5. The method according to claim 1, wherein the first indication information is carried by any one of the following signaling:
first signaling, wherein the first signaling is signaling used to indicate whether the network controlled small gap is required by intra-frequency measurement;
second signaling, wherein the second signaling is signaling used to indicate whether a gap is required by the intra-frequency measurement; and
third signaling, wherein the third signaling is signaling specially used to indicate whether the first gap needs to be configured for the layer 1 measurement.

6. The method according to claim 5, wherein in a case that the first indication information indicates that the first gap does not need to be configured, an interruption behavior of a second serving cell satisfies at least one of the following conditions:
in a case that the first indication information is carried by the first signaling, the second serving cell does not allow interruption to occur; and
in a case that the first indication information is carried by the second signaling or the third signaling, the second serving cell does not allow interruption to occur, and alternatively, interruption of the second serving cell is located before and after a symbol where the first signal of the first measurement is located, wherein
the second serving cell is a serving cell other than the first serving cell of at least two serving cells connected to the terminal.

7. The method according to claim 1, wherein in a case that the first signal is the SSB, the first configuration information comprises any one of the following:
BWP configuration information and SSB configuration information; and
BWP configuration information, SSB configuration information, and carrier bandwidth configuration information.

8. The method according to claim 7, wherein in a case that the first indication information is carried by first signaling or second signaling, the first configuration information further comprises at least one of the following:
carrier aggregation (CA) configuration information; and
multiple-input multiple-output (MIMO) configuration information, wherein
the first signaling is signaling used to indicate whether a network controlled small gap is required by intra-frequency measurement, and the second signaling is signaling used to indicate whether a gap is required by the intra-frequency measurement.

9. The method according to claim 7, wherein the SSB configured by the SSB configuration information is at least partially located outside the activated BWP of the first serving cell.

10. The method according to claim 9, wherein the first measurement satisfies at least one of the following conditions:
in a case that the first operation comprises the operation 2, the first measurement satisfies a first limiting condition; and
in a case that the first operation comprises the operation 1 or the operation 4, and the first indication information indicates that the first gap does not need to be configured, the first measurement satisfies the first limiting condition, wherein
the first limiting condition comprises at least one of the following conditions:
the first measurement has a same measurement limitation as the layer 1 measurement in a case of satisfying a first condition; and
the first measurement has a same scheduling limitation as the layer 1 measurement in a case of satisfying the first condition, wherein
the first condition comprises: the configured SSB is located in the activated BWP of the first serving cell.

11. The method according to claim 10, wherein an operation bandwidth of the terminal is determined based on any one of the following:
the activated BWP of the first serving cell and the SSB configured by the SSB configuration information; and
the carrier bandwidth configuration information.

12. The method according to claim 1, wherein in a case that the first operation comprises the operation 2, the first measurement does not cause interruption of the second serving cell, and the second serving cell is a different serving cell except for the first serving cell of at least two serving cells connected to the terminal.

13. The method according to claim 1 or 3, wherein the measurement gap configuration information comprises at least one measurement gap configuration, and the measurement gap configuration comprises a measurement gap repetition period, a measurement gap length, a measurement gap offset, and a measurement gap timing advance.

14. The method according to claim 13, wherein the measurement gap configuration further comprises at least one of the following:
a measurement gap priority;
measurement gap allocation information; and
a measurement type associated with the measurement gap.

15. The method according to claim 13, wherein the measurement gap configuration information satisfies at least one of the following conditions:
in a case that the measurement gap configuration information comprises one measurement gap configuration, the measurement gap configuration is used for the first measurement, and alternatively, the measurement gap configuration is used for the first measurement and the second measurement; and
in a case that the measurement gap configuration information comprises at least two measurement gap configurations, the measurement gap configurations further comprise measurement types associated with the measurement gap.

16. The method according to claim 15, wherein in a case that the measurement gap configuration information comprises the one measurement gap configuration, and the measurement gap configuration is used for the first measurement and the second measurement, the method further comprises either one of:
determining, by the terminal, the first gap used for the first measurement and the second gap used for the second measurement in the measurement gap corresponding to the measurement gap configuration based on a first allocation ratio, wherein the first allocation ratio is an allocation ratio agreed by a protocol, or an allocation ratio indicated by measurement gap allocation information comprised by the measurement gap configuration; and
determining, by the terminal, the first gap used for the first measurement and the second gap used for the second measurement in the measurement gap corresponding to the measurement gap configuration, wherein only the first measurement is comprised in the first gap, the first measurement and the second measurement are comprised in the second gap, and the first measurement and the second measurement conflict with each other in the second gap.

17. The method according to claim 15, wherein in a case that the measurement gap configuration information comprises at least two measurement gap configurations, and a measurement gap repetition period of the first measurement is shorter than a measurement gap repetition period of the second measurement, the first measurement satisfies either one of the following conditions:
the first measurement is conducted in the first gap that does not conflict with the second gap; and
in a case that the first gap and the second gap conflict with each other, whether to conduct the first measurement in the first gap is determined according to a measurement gap priority.

18. The method according to claim 13, wherein the measurement gap configuration is used to configure a measurement gap at a terminal level or used to configure a measurement gap at a frequency range (FR) level.

19. The method according to claim 1, wherein in a case that the first measurement is conducted in the first gap, only a reference signal associated with the first measurement and a signal of a random access procedure are received in the first gap.

20. The method according to any one of claims 1 to 19, wherein the first measurement comprises at least one of the following:
downlink timing measurement, reference signal received power measurement of the layer 1, radio link monitoring measurement, beam failure detection (BFD) measurement, and candidate beam detection (CBD) measurement.

21. The method according to any one of claims 1 to 19, wherein the second measurement is layer 3 measurement.

22. A method for processing measurement, comprising:
transmitting, by a first serving cell, measurement gap configuration information to a terminal, wherein the measurement gap configuration information comprises a measurement gap configuration of layer 1; and the measurement gap configuration information is used by the terminal to conduct first measurement in a first gap, and the first gap is determined based on the measurement gap configuration of the layer 1.

23. The method according to claim 22, wherein the transmitting, by a first serving cell, measurement gap configuration information to a terminal comprises:
transmitting, by the first serving cell, first configuration information to the terminal;
receiving, in a case that a first signal determined and configured by the terminal based on the first configuration information is at least partially located in an activated bandwidth part (BWP) of the first serving cell, first indication information from the terminal by the first serving cell; and
transmitting, in a case that the first indication information indicates that the first gap needs to be configured, the measurement gap configuration information to the terminal by the first serving cell, wherein
the first signal comprises a synchronization signal block (SSB) or a channel state information reference signal (CSI-RS).

24. The method according to claim 23, wherein in a case that the first indication information indicates that the first gap needs to be configured, and the first gap is a network controlled small gap, the measurement gap configuration of the layer 1 is a network controlled small gap pattern configuration.

25. The method according to claim 23, wherein the first indication information is carried by any one of the following signaling:
first signaling, wherein the first signaling is signaling used to indicate whether the network controlled small gap is required by intra-frequency measurement;
second signaling, wherein the second signaling is signaling used to indicate whether a gap is required by the intra-frequency measurement; and
third signaling, wherein the third signaling is signaling specially used to indicate whether the first gap needs to be configured for layer 1 measurement.

26. The method according to claim 23, wherein in a case that the first signal is the SSB, the first configuration information comprises any one of the following:
BWP configuration information and SSB configuration information; and
BWP configuration information, SSB configuration information, and carrier bandwidth configuration information.

27. The method according to claim 22, wherein the measurement gap configuration information comprises at least one measurement gap configuration, and the measurement gap configuration comprises a measurement gap repetition period, a measurement gap length, a measurement gap offset, and a measurement gap timing advance.

28. The method according to claim 27, wherein the measurement gap configuration further comprises at least one of the following:
a measurement gap priority;
measurement gap allocation information; and
a measurement type associated with the measurement gap.

29. The method according to claim 27, wherein the measurement gap configuration information satisfies at least one of the following conditions:
in a case that the measurement gap configuration information comprises one measurement gap configuration, the measurement gap configuration is used for the first measurement and second measurement; and
in a case that the measurement gap configuration information comprises at least two measurement gap configurations, the measurement gap configurations further comprise measurement types associated with the measurement gap.

30. The method according to any one of claims 22 to 29, wherein the first measurement comprises at least one of the following:
downlink timing measurement, reference signal received power measurement of the layer 1, radio link monitoring measurement, beam failure detection (BFD) measurement, and candidate beam detection (CBD) measurement.

31. The method according to claim 29, wherein the second measurement is layer 3 measurement.

32. An apparatus for processing measurement, comprising:
a first reception module used to receive first information from a first serving cell; and
an execution module used to execute a first operation, wherein
the first operation comprises any one of the following operations:
operation 1, in a case that the first information comprises first configuration information, first indication information indicating whether a first gap needs to be configured is transmitted to the first serving cell based on the first configuration information, wherein the first indication information is determined based on the first configuration information, and the first gap is a measurement gap for first measurement;
operation 2, in a case that the first information comprises first configuration information, and it is determined based on the first configuration information that a configured first signal is at least partially located in an activated bandwidth part (BWP) of the first serving cell, first measurement is conducted outside a second gap, and alternatively, first measurement is conducted not based on a measurement gap;
operation 3, in a case that the first information comprises measurement gap configuration information, first measurement is conducted in a first gap, wherein the first gap is determined based on the measurement gap configuration information; and
operation 4, first indication information indicating whether a first gap needs to be configured is transmitted to the first serving cell based on the first information, wherein the first gap is a measurement gap for first measurement, wherein
the second gap is a measurement gap for second measurement other than the first measurement, the first measurement is layer 1 measurement, and the first signal comprises a synchronization signal block (SSB) or a channel state information reference signal (CSI-RS).

33. An apparatus for processing measurement, comprising:
a transmission module used to transmit measurement gap configuration information to a terminal, wherein the measurement gap configuration information comprises a measurement gap configuration of layer 1; and the measurement gap configuration information is used by the terminal to conduct first measurement in a first gap, and the first gap is determined based on the measurement gap configuration of the layer 1.

34. A terminal, comprising a processor and a memory, wherein the memory stores a program or an instruction runnable on the processor, and when the program or the instruction is executed by the processor, steps of the method for processing measurement according to any one of claims 1 to 21 are implemented.

35. A network side device, comprising a processor and a memory, wherein the memory stores a program or an instruction runnable on the processor, and when the program or the instruction is executed by the processor, steps of the method for processing measurement according to any one of claims 22 to 31 are implemented.

36. A readable storage medium, storing a program or an instruction, wherein when the program or the instruction is executed by the processor, steps of the method for processing measurement according to any one of claims 1 to 31 are implemented.
